# FASCICULE DE BREVET EUROPEEN

(11) **EP 2 370 202 B1**
(45) Date de publication et mention de la délivrance du brevet: **03.10.2012**
(21) Numéro de dépôt: 09805788.8
(22) Date de dépôt: 23.12.2009
(51) Int. Cl.: B01J 8/00, B65G 69/04

(54) **DISPOSITIF POUR LE CHARGEMENT DE PARTICULES SOLIDES DANS UNE ENCEINTE**
VORRICHTUNG ZUM LADEN VON FESTEN TEILCHEN IN EINE KAMMER
DEVICE FOR LOADING SOLID PARTICLES INTO AN ENCLOSURE

(30) Priorité: 31.12.2008 FR 0859163
(43) Date de publication de la demande: 05.10.2011
(73) Titulaire: Total Raffinage Marketing, 92800 Puteaux (FR)
(72) Inventeur: COTTARD, Bernard, F-76430 Saint Romain de Colbosc (FR); LEROY, Pascal, F-76290 Montvilliers (FR)
(74) Mandataire: Largeau, Béatrice
(86) Numéro de dépôt international: PCT/FR2009/052683
(87) Numéro de publication internationale: WO 2010/076522

(56) Documents cités:
- EP-A- 0 116 246
- EP-A- 0 769 462

## Description

L'invention concerne un dispositif de chargement de particules solides dans une enceinte, permettant notamment, grâce à la configuration des lanières constituant l'équipage mobile nécessaire à la dispersion des particules, d'améliorer la forme des profils de chargement de l'enceinte.

L'invention concerne plus particulièrement le chargement des réacteurs à lit fixe, notamment de type chimique, électrochimique, pétrolier ou pétrochimique, avec des particules solides à l'état divisé, qui peuvent par exemple se présenter sous forme de billes, de grains, de cylindres, de pastilles, de bâtonnets ou de toute autre forme, et qui sont généralement de dimensions relativement faibles.

Les particules peuvent être en particulier des tamis moléculaires ou des grains de catalyseurs solides, généralement extrudés, réalisés soit sous forme irrégulière, soit sous forme de bâtonnets mono ou multilobes, dont les dimensions peuvent varier selon les cas de quelques dixièmes de millimètres à quelques centimètres.

C'est à cette application dite de « chargement dense » de grains de catalyseur dans un réacteur chimique que l'on se référera plus particulièrement dans la suite de la présente description, mais le dispositif selon l'invention s'applique au chargement de tout autre type de particules solides dans tout type d'enceinte.

Par « chargement dense », on entend au sens de la présente invention un chargement par effet de pluie optimisé afin de permettre de charger dans un minimum d'espace et un minimum de temps, un maximum de particules solides, de façon homogène et la plus uniforme possible.

On connaît un certain nombre de procédés et de dispositifs permettant d'augmenter la densité d'un lit fixe de particules de catalyseur dans un réacteur chimique. Ces procédés ont en commun l'introduction des particules à charger par le sommet du réacteur et la collision des particules individuelles lors de leur chute avec des déflecteurs mécaniques fixes ou mobiles, provoquant une déviation aléatoire des dites particules. Idéalement, les particules ainsi détournées de leur trajet de chute verticale tombent individuellement et librement par effet de pluie sur l'ensemble de la surface du front de remplissage où elles forment un dépôt dense et homogène.

La Demanderesse, dans le cadre de ses efforts pour optimiser ces systèmes de chargement de réacteurs, a mis au point un dispositif de remplissage permettant, grâce à un équipage mobile destiné à la dispersion des particules solides comprenant des déflecteurs souples articulés sur un arbre en rotation, de réduire considérablement l'encombrement stérique du système de déflecteurs et de faciliter son installation dans les réacteurs. Ce système de base est décrit dans la demande de brevet EP 0 007 854 et des améliorations de ce dispositif de remplissage sont divulguées dans les demandes EP 0 116 246, EP 0 769 462 et EP 1 776 302.

Malgré un ensemble de déflecteurs performants, le comportement des particules de catalyseur au cours du remplissage du réacteur peut être différent du comportement idéal décrit ci-dessus. Le « front de remplissage », encore appelé « profil de chargement », c'est-à-dire l'interface entre le lit catalytique et la partie non encore remplie du réacteur, peut s'écarter parfois sensiblement de l'horizontale et/ou présenter des bosses et/ou des creux sur ledit front de remplissage. Les particules de catalyseur, en particulier lorsqu'elles ont une forme anisotrope, peuvent se positionner selon des directions privilégiées créant ainsi des chemins de passage préférentiels pour la charge liquide et le gaz réactif à travers le lit catalytique. Ceci peut entraîner un fonctionnement du réacteur qui peut devenir insatisfaisant, par exemple en terme d'hydrodynamique et, in fine, provoquer un manque à gagner pour l'exploitant.

La Demanderesse arrive actuellement à garantir à ses clients des pentes du front de remplissage ne dépassant pas 10 % avec un minimum de bosses et creux, mais elle cherche toujours à réduire cette valeur et à améliorer les performances du chargement afin d'assurer un fonctionnement optimal des réacteurs remplis avec son dispositif pour charger dense.

De plus, l'augmentation des débits de chargement des particules de catalyseur, eu égard à une diminution du temps dudit chargement et/ou à une augmentation du volume de l'enceinte à charger, peut engendrer des altérations des profils de chargements des types cités précédemment.

Une action sur la vitesse de rotation de l'équipage mobile, peut permettre en partie une correction des fronts de remplissage insatisfaisants, mais dans certains cas la perméabilité de l'équipage mobile peut s'avérer insuffisante. Ceci peut avoir pour conséquence une absence, notamment partielle, ou une plus faible densité de particules de catalyseur en certains points de la section du réacteur. Cette absence, par exemple partielle, ou cette densité plus faible peut notamment être répartie suivant un anneau concentrique par rapport à l'axe de rotation de l'équipage mobile.

Au sens de la présente invention, la perméabilité de l'équipage mobile est définie comme la proportion du nombre de particules solides traversant l'équipage sans être déviées par celui-ci sur le nombre total de particules chargées, et peut varier couramment de 2 % à 50 % en nombre.

Au cours de ses nombreuses recherches sur la technique du chargement dense de particules solides dans une enceinte, et notamment de grains de catalyseur dans des réacteurs chimiques de différentes hauteurs et diamètres de chargement, la Demanderesse s'est aperçue qu'en modifiant la forme, en particulier à des endroits précis, de certaines lanières constituant l'équipage mobile, une proportion de particules de catalyseur traverse préférentiellement cet équipage mobile et peut permettre de corriger en tout ou partie le défaut de planéité du profil de chargement tel qu'évoqué ci-dessus.

C'est ainsi que la Demanderesse a mis au point un dispositif qui, tout étant basé sur le même principe que le système de chargement dense (dit « Densicat^{®} ») divulgué dans EP 0 769 462, avec la même facilité de mise en place dans le réacteur à charger et de fonctionnement, permet en outre d'améliorer les profils de chargement de tout type de réacteur.

Selon un premier aspect, la présente invention a pour objet un dispositif pour le chargement, en particulier homogène et uniforme, de particules solides dans une enceinte, comprenant :
- un moyen d'alimentation en particules solides à distribuer, apte à être disposé sur la partie supérieure de l'enceinte à charger, ledit moyen déversant lesdites particules solides de façon sensiblement verticale dans un conduit d'alimentation,
- un équipage mobile, disposé en tout ou partie à l'intérieur de l'enceinte et au-dessous du conduit d'alimentation, comprenant un arbre central sensiblement vertical entraîné en rotation par un moyen moteur et des éléments déflecteurs de forme sensiblement identique, solidaires en rotation dudit arbre, de préférence disposés à l'aplomb les uns des autres sur plusieurs niveaux verticaux autour de l'arbre et articulés sur celui-ci de façon à pouvoir se soulever, par exemple sous l'action de la force centrifuge,
- un conduit d'alimentation entourant au moins partiellement ledit arbre central et comportant au moins un orifice d'évacuation des particules solides disposé sur une paroi latérale ou horizontale,
ce dispositif étant caractérisé en ce qu'il contient au moins un élément déflecteur disposé sur l'arbre entraîné en rotation dont la surface d'une zone située à proximité dudit arbre est inférieure à la surface de la même zone des autres éléments déflecteurs, en particulier la largeur à proximité dudit arbre est plus petite que celle des autres éléments déflecteurs.

Selon un autre de ses aspects, l'invention a également pour objet l'utilisation d'un tel dispositif pour le chargement des réacteurs pétroliers, chimiques ou pétrochimiques.

Selon encore un autre de ses aspects, l'invention a pour objet un procédé de chargement de réacteurs, notamment pétroliers, chimiques ou pétrochimiques avec le dispositif selon l'invention.

Dans le dispositif de chargement de la présente invention, les particules de catalyseur en provenance du moyen d'alimentation qui peut être une trémie ou tout équivalent, descendent sous l'effet de la gravité dans le conduit d'alimentation, c'est-à-dire entre les parois internes dudit conduit d'alimentation. Le conduit d'alimentation comporte à sa base au moins un orifice d'évacuation, situé au-dessus du système de dispersion, en particulier constitué par les lanières. Ainsi, les particules tombent, au moins en partie, sur ledit système de dispersion entraîné en rotation par l'arbre central via l'orifice d'évacuation.

Outre une première alimentation en particules solides s'effectuant par le conduit d'alimentation au-dessus de l'équipage mobile, au moins une alimentation additionnelle peut être effectuée. Cette alimentation additionnelle peut se faire via des orifices ménagés dans le conduit d'alimentation et disposés sur ses parois verticale et/ou horizontale. Des particules peuvent ainsi tomber sur des parties des déflecteurs souples éloignées de l'arbre moteur. Cela peut en accroître l'homogénéité de la distribution dans l'enceinte à grande distance de l'axe central. Un choix judicieux de la ou de ces ouvertures peut permettre de remplir sélectivement et de façon dense et homogène des éventuelles portions d'enceinte excentrées par rapport à l'axe de l'équipage mobile.

Le moteur qui entraîne en rotation l'arbre central tubulaire du dispositif de l'invention est de préférence excentré par rapport à cet arbre et peut être alimenté par un gaz comprimé quelconque, par exemple par de l'air ou de l'azote. La transmission du mouvement rotatif du moyen moteur vers l'arbre tubulaire peut se faire par n'importe quel moyen connu approprié, par exemple par une courroie, une chaîne, un jeu de pignons, ou par une combinaison de ces moyens.

L'arbre central utilisé dans la présente invention peut être plein ou creux comme décrit dans EP 1 776 302. Cette dernière particularité peut offrir l'avantage de pouvoir disposer d'un passage au sein dudit arbre central, par exemple et non limitativement pour y loger des appareils de mesure du suivi du niveau du lit catalytique en cours de chargement et/ou pour aspirer les éventuelles poussières de catalyseur émises lors de ce même chargement.

Les éléments déflecteurs sont disposés, de préférence, à l'aplomb des uns des autres de manière à conférer à l'ensemble de l'équipage mobile un taux de vide pouvant varier entre 30 % et 80% suivant les dimensions des lanières généralement utilisées.

Dans la présente description, on entend par « taux de vide de l'équipage mobile », le rapport (en %) de la surface non couverte par les déflecteurs à la surface totale projetée de l'équipage mobile, une fois les éléments déflecteurs déployés dans l'enceinte.

De préférence, la vitesse de rotation de l'arbre qui supporte les déflecteurs est ajustée en fonction de la hauteur de chargement, ladite vitesse de rotation étant généralement comprise entre environ 25 et environ 250 tours par minute et, de préférence entre 40 et 150 tours par minute.

Les divers niveaux des déflecteurs, qui sont au nombre de 2 ou plus, et, de préférence, de trois ou quatre, sont espacés les uns des autres d'une distance comprise entre 2 et 20 centimètres et, de préférence, entre 4 et 10 centimètres.

Les lanières constituant les déflecteurs ont des dimensions longitudinales pouvant être comprises entre 10 centimètres et 2 mètres, et de préférence, entre 10 cm et un mètre. Les lanières peuvent également avoir toutes formes connues dans la technique, à savoir, par exemples, rectangulaires, triangulaires ou trapézoïdales.

D'une manière générale, les lanières sont des déflecteurs particuliers. Dans la présente description, lorsque le terme lanière est utilisé il peut, sauf indication contraire, également signifié déflecteur.

Chaque niveau de déflecteurs peut comprendre au moins deux déflecteurs, de préférence de quatre à douze et de manière encore plus préférée huit déflecteurs. Ces déflecteurs étant disposés autour de l'axe de rotation et ayant de préférence des formes identiques. En particulier les Y déflecteurs sont disposés chacun à 360/Y° les unes des autres.

La tendance des chargements actuels étant à l'augmentation des débits d'alimentation en particules solides, qui peuvent maintenant atteindre 30 t/h, voire plus. Ceci peut avoir comme conséquence que les profils de chargement deviennent dépendants de cette augmentation de débits, et peuvent être altérés en fonction de l'augmentation du débit de chargement.

Des débits importants de particules solides peuvent être obtenus en augmentant le nombre d'orifices d'évacuation, notamment situés sur les parois horizontale et/ou verticale du conduit d'alimentation et leurs ouvertures peuvent être réglées, par exemple à la position maximale.

Une action sur la vitesse de rotation de l'équipage mobile peut permettre d'améliorer sensiblement les profils de chargement mais cela n'est pas toujours suffisant pour obtenir le critère requis ou souhaité d'horizontalité.

La Demanderesse a, de manière surprenante, découvert qu'en modifiant la forme des déflecteurs ou lanières du plus bas niveau de l'équipage mobile des meilleurs résultats en terme de planéité du front de chargement ont été obtenus.

Au moins deux déflecteurs, ou lanières, modifiés sont installés symétriquement sur ce troisième niveau, de préférence quatre et de manière encore plus préférée huit. En particulier un nombre identique de déflecteurs, ou lanières, aux deux autres niveaux de l'équipage mobile.

La modification de la forme de ces déflecteurs, ou lanières, proche de leur attache sur l'arbre central en rotation, peut permettre d'ajuster la perméabilité de l'équipage mobile dans une zone déterminée du profil de chargement. Cette modification de la surface des déflecteurs, ou lanières, paraissant être en relation avec la zone de chargement circulaire « non-conforme » comme évoquée ci-dessus.

Le changement de forme des déflecteurs, ou lanières, peut être essentiellement orienté sur :
- une diminution de sa largeur comprise entre 20 % et 80 %, de préférence entre 30 % et 70 % et/ou
- une longueur comprise entre 10 % et 50 %, de préférence entre 20 % et 40 % et de manière préférée entre 20 et 30 % de la longueur totale de la lanière.

Les déflecteurs présents sur un même niveau peuvent être identiques entre eux. Tout particulièrement les déflecteurs des niveaux supérieurs, en particulier de tous les niveaux au dessus du niveau le plus bas, sont identiques entre eux. Les déflecteurs des niveaux inférieurs, en particulier du niveau le plus bas, peuvent être identiques entre eux.

Le dispositif selon l'invention peut comprendre au moins deux types de déflecteurs, des déflecteurs de taille dite « de référence » et des déflecteurs présentant une surface inférieure à ceux de taille « de référence ». Tout particulièrement le dispositif selon l'invention comprend deux types de déflecteurs. En particulier les déflecteurs de taille de référence sont identiques entre eux et les déflecteurs présentant une surface inférieure sont identiques entre eux.

L'extrémité de la lanière servant à son attache sur l'arbre mobile n'est en général pas diminuée. De préférence, la restriction de la largeur indiquée ci-dessus est la somme des diminutions qui sont réalisées symétriquement de chaque côté de celle-ci par rapport à son axe longitudinal et sur la partie localisée près de l'arbre de rotation.

La matière constituant les lanières ou les déflecteurs peut être un matériau semi-rigide, de préférence en caoutchouc souple renforcé avec une fibre textile et son épaisseur peut varier entre 2 mm à 10 mm et de préférence entre 3 et 8 mm.

L'invention est maintenant décrite en référence aux dessins annexés, non limitatifs, dans lesquels :
- la figure 1 est une vue schématique du dispositif objet de la présente invention,
- la figure 2 est une vue longitudinale d'un exemple de lanière telle qu'utilisée sur les niveaux 1 et 2 du dispositif objet de la présente invention, et
- la figure 3 est une vue longitudinale de cette même lanière, installée au troisième niveau du dispositif objet de l'invention, après réduction de sa largeur conformément à la présente invention.

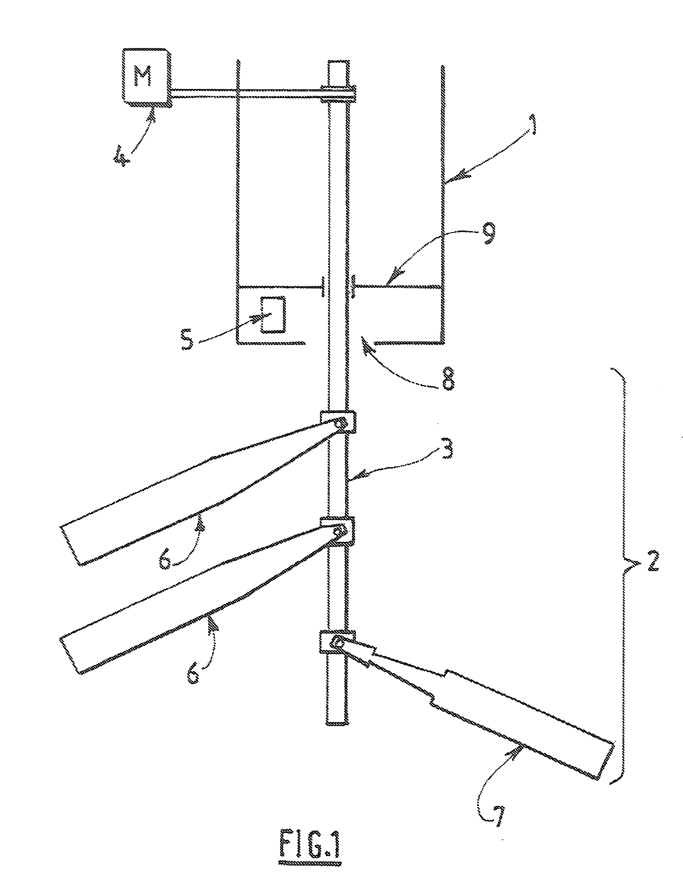

Le dispositif de la figure 1 comporte une trémie d'alimentation (non représentée), disposée au-dessus du réacteur et qui alimente, par gravité, le conduit d'alimentation (1) en particules de catalyseur.

Dans ce conduit d'alimentation (1) est disposé sensiblement sur l'axe longitudinal d'un réacteur circulaire, l'arbre (3) de l'équipage mobile (2), entraîné en rotation par le moyen moteur (4).

Un dispositif de centrage et de maintien (9) de cet arbre en rotation (3) est disposé dans le conduit d'alimentation (1).

Les grains de catalyseur tombent par gravité via une ouverture (8) ménagée dans le conduit d'alimentation (1) sur le système dispersif constitué des lanières (6) et (7), réparties sur 3 niveaux à la verticale sur l'arbre en rotation (3).

Pour augmenter les débits de chargement, c'est-à-dire la quantité de particules de catalyseur alimentant l'équipage mobile, des orifices d'évacuation (un seul représenté sur la figure 1) (5) sont disposées sur les parois latérale et/ou horizontale du conduit d'alimentation (1).

Ces orifices (5) sont généralement réglables en surface par l'intermédiaire d'un volet coulissant manuellement ou automatiquement (non représenté) venant obturer plus ou moins partiellement l'orifice d'évacuation selon le débit de particules requis pour le chargement.

Sur cette figure et pour une meilleure compréhension de l'invention, les lanières (6) et (7) sont représentées de face, c'est-à-dire vue de dessus de l'équipage mobile. Une seule lanière est représentée pour la clarté du dessin, mais elles sont, de préférence, au nombre de huit pour chacun des niveaux, réparties également dans chacun des espaces de niveau et disposées à l'aplomb des unes des autres.

Les huit lanières (7) du troisième niveau inférieur comportent toutes une diminution de leur largeur localisée à proximité de leur attache sur l'arbre en rotation (3) pour augmenter la perméabilité de l'équipage mobile.

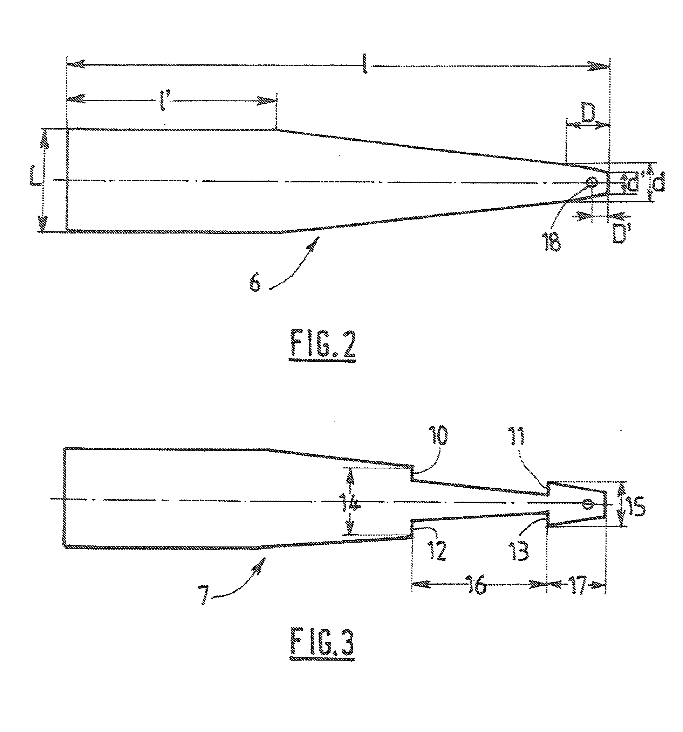

Une description plus détaillée des ces lanières modifiées est indiquée dans la figure 3.

Sur la figure 2, les dimensions de la lanière sont exprimées en millimètres et correspondent, par exemple, à un type de lanière pour constituer un équipage mobile en vue du chargement d'un grand réacteur chimique d'un diamètre pouvant atteindre 5 mètres.
- Plus précisément, les distances peuvent être les suivantes : 1 : 800 mm,
- l' : 300 mm,
- L : 150 mm,
- D : 40 mm,
- D' : 20 mm,
- d : 50 mm,
- d' : 30 mm et
- diamètre de l'orifice 18 : 8 mm.

L'orifice 18 localisé dans la partie la plus effilée de la lanière est destiné à son attache sur le porte-lanières disposé sur l'arbre en rotation de l'équipage mobile.

Son épaisseur est de 5 mm et elle est constituée en un matériau caoutchouc semi-rigide renforcé par une fibre interne textile.

Sur la figure 3, la forme de cette même lanière a été modifiée afin de renforcer sa perméabilité au niveau de l'aire de chargement proche de l'axe central de l'équipage mobile.

La réduction de sa largeur en (10) et (12), puis (11) et (13) comme indiqués sur cette même figure est de 20 mm, soit une diminution des largeurs (14) (110 mm) et (15) (60 mm) de la lanière, soit respectivement de 36 % et 66%.

Cette diminution a été réalisée sur une longueur (16) de 200 mm, représentant 25 % de la longueur totale de la lanière.

La longueur (17) (70 mm) de la lanière n'a pas été modifiée pour assurer un excellent accrochage sur le porte-lanière situé sur l'arbre rotatif.

### Exemple

La Demanderesse a mis en oeuvre le dispositif objet de la présente invention sur une maquette représentative d'une enceinte type d'un réacteur chimique cylindrique utilisé dans ses raffineries. Cette maquette présente les dimensions suivantes :
- hauteur : 5, 00 m,
- diamètre : 3,80 m,

Deux essais ont été réalisés avec un dispositif de dispersion conforme à celui décrit dans EP 0 769 462 pour l'essai 1, puis avec des lanières modifiées, conformément à la présente invention, pour l'essai 2.

### Conditions de réalisation des essais

- type de catalyseur : Al₂O₃ avec une densité de 0,85,
- dimensions moyennes des grains de catalyseur : forme trilobe, diamètre 1,5 mm et longueur moyenne 2,7 mm,
- quantité de catalyseur chargée : 2,5 m³,
- débit d'alimentation de l'équipage mobile en grains de catalyseur : >30 T/h,
- vitesse de rotation de l'équipage mobile : 95 tours par minute,
- ouverture des 9 orifices d'évacuation latérales et 9 horizontales,
- temps du chargement : 2 minutes,
- 3 niveaux de lanières,
- 8 lanières par niveau
- dimensions de toutes les lanières : longueur 55 cm, petite largeur 7cm et grande largeur 10 cm, épaisseur 6 mm,
- lanières de forme trapézoïdales telles que décrites dans EP 0 769 362,
- arbre central de rotation plein.

### Particularités pour l'essai 1

Les 8 lanières équipant chacun des 3 niveaux sont identiques.

### Particularités de l'essai 2

Les 8 lanières du troisième et niveau le plus bas de l'équipage mobile de l'essai 1 sont modifiées conformément à la présente invention.

Elles présentent des réductions de leur largeur totale de 5 cm réparties de chaque côté de l'axe longitudinal de la lanière sur une longueur de 12 cm.

La longueur non diminuée proche de l'arbre de rotation et servant à l'attache de lanière sur le dit arbre est de 7 cm.

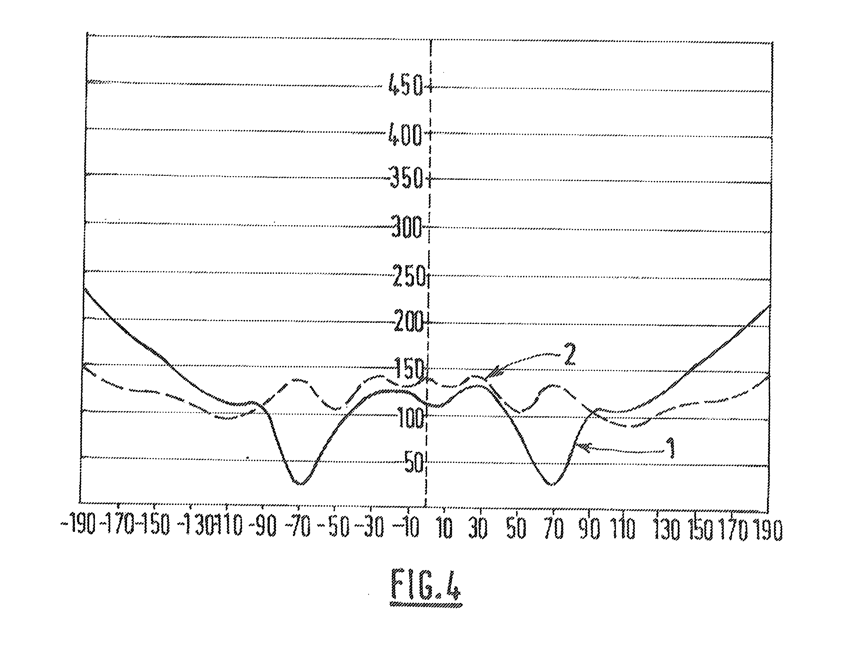

La figure 4 représente en ordonnée la hauteur en millimètres de grains de catalyseur chargés lors des essais 1 et 2 et en abscisse le diamètre en centimètres de l'enceinte chargée.

Chacun des points constitutifs des deux courbes sont des valeurs moyennes des hauteurs mesurées à différents endroits de la circonférence correspondante.

Pour l'essai 1 c'est-à-dire l'essai réalisé avec l'équipage mobile constitué de 3 niveaux de chacun 8 lanières identiques (repère 1 sur la figure 4), on voit que le centre de l'enceinte adopte une forme de bosse tandis qu'à une distance de 70 cm de l'axe central, c'est à dire l'axe de l'arbre de rotation de l'équipage mobile, un creux par manque de particules solides s'est formé. La bosse à une hauteur de environ 100 mm tandis que les creux ont une profondeur de également environ 70 mm.

La pente maximale enregistrée (hors creux) est de 100 mm et (avec creux) de 200 mm pour une horizontale (rayon de l'enceinte) de 190 cm, soit des valeurs relatives respectives de la pente de 5 % et de 10 %, valeurs restant toutefois admissibles et sous le critère de garantie du chargement annoncé à l'exploitant qui est de 10% maximum.

Pour l'essai 2 dans lequel les 8 lanières du troisième niveau ont été modifiées conformément à la présente invention, le profil de chargement (repère 2 sur la figure 4), est nettement plus plat avec un écart maxi entre les extrêmes de l'ordre de 50 mm, soit une pente relative égale à environ 2,6 %.

A l'enseignement de ces essais, la mise en oeuvre de l'invention, qui permet d'ajuster la perméabilité de l'équipage mobile du dispositif de dispersion par la modification des lanières du troisième niveau, améliore très nettement le profil de chargement d'un lit catalytique dans un réacteur chimique ou, par extension, le front de chargement de particules solides dans une enceinte par utilisation du dispositif conforme à la présente invention.

## Revendications

1. Dispositif pour le chargement de particules solides dans une enceinte, comprenant :
- un moyen d'alimentation en particules solides à distribuer, apte à être disposé sur la partie supérieure de l'enceinte à charger, ledit moyen déversant lesdites particules solides de façon sensiblement verticale dans un conduit d'alimentation (1),
- un équipage mobile (2), disposé en tout ou partie à l'intérieur de l'enceinte et au-dessous du conduit d'alimentation, comprenant un arbre central entraîné en rotation (3) par un moyen moteur (4) autour d'un axe sensiblement vertical et des éléments déflecteurs de forme sensiblement identique (6), solidaires en rotation dudit arbre (3), de préférence disposés à l'aplomb des uns des autres suivant plusieurs niveaux autour de l'arbre (3) et articulés sur celui-ci de façon à pouvoir se soulever, par exemple sous l'action de la force centrifuge,
- un conduit d'alimentation (1) entourant au moins partiellement ledit arbre central (3) et comportant au moins un orifice d'évacuation des particules solides (5) disposé sur sa paroi latérale ou horizontale,
**caractérisé en ce que** le dispositif comprend au moins un élément déflecteur (7) disposé sur l'arbre entraîné en rotation (3) dont la surface d'une zone située à proximité dudit arbre (3) est inférieure à la surface de la même zone des autres éléments déflecteurs (6), en particulier la largeur à proximité dudit arbre est plus petite que celle des autres éléments déflecteurs.

2. Dispositif selon la revendication 1, **caractérisé en ce que** les éléments déflecteurs (6) sont des lanières constituées en caoutchouc semi-rigide (6).

3. Dispositif selon la revendication 1 ou 2, **caractérisé en ce qu'**il comporte trois niveaux d'éléments déflecteurs (6).

4. Dispositif selon l'une quelconque des revendications 1 à 3, **caractérisé en ce qu'**il comporte deux éléments déflecteur (7), de préférence quatre et de manière encore plus préférée huit éléments déflecteur (7) dont la largeur est modifiée à proximité de l'arbre central (3).

5. Dispositif selon l'une quelconque des revendications 1 à 4, **caractérisé en ce que** les éléments déflecteur (7) modifiés sont disposés sur un même niveau, et de préférence sur le troisième et plus bas niveau.

6. Dispositif selon l'une quelconque des revendications 1 à 5, **caractérisé en ce que** la diminution de la largeur des éléments déflecteur (7) est comprise entre 20 % et 80%, et de préférence entre 30 % et 70 % de leur largeur initiale.

7. Dispositif selon l'une quelconque des revendications 1 à 6, **caractérisé en ce que** la diminution de la largeur des éléments déflecteur (7) est réalisée sur une longueur comprise entre 10 % et 50 %, de préférence entre 20 % et 40 %, et de manière encore plus préférée entre 20 % et 30 % de la longueur totale de l'élément déflecteur.

8. Dispositif selon l'une quelconque des revendications 1 à 7, **caractérisé en ce que** les éléments déflecteur (6) sont disposées symétriquement sur l'arbre en rotation.

9. Dispositif selon l'une quelconque des revendications 1 à 8, **caractérisé en ce que** les éléments déflecteur (6) sont également répartis sur chacun des niveaux.

10. Dispositif selon l'une quelconque des revendications 1 à 9, **caractérisé en ce que** huit éléments déflecteur (6) sont disposés sur chacun des niveaux d'éléments déflecteurs.

11. Dispositif selon l'une quelconque des revendications 1 à 10, **caractérisé en ce que** le taux de vide des éléments déflecteurs (6) est compris entre 30 % et 80 %.

12. Dispositif selon l'une quelconque des revendications 1 à 11, **caractérisé en ce que** l'arbre de rotation (3) peut être un tube plein ou un tube creux.

13. Dispositif selon l'une quelconque des revendications 1 à 12, **caractérisé en ce que** la vitesse de rotation des éléments déflecteurs (6) est comprise entre 25 et 250 t/mn et de préférence entre 40 et 150 t/mn.

14. Utilisation du dispositif selon l'une quelconque des revendications 1 à 13 pour le chargement de particules de catalyseur dans des réacteurs pétroliers, chimiques ou pétrochimiques.

15. Procédé de chargement de réacteurs, notamment pétroliers, chimiques ou pétrochimiques avec le dispositif selon l'une quelconque des revendications 1 à 13.

## Claims

1. A device for loading solid particles into an enclosure, comprising:
- a means for feeding solid particles to be distributed, adapted to be positioned on the upper part of the enclosure to be loaded, this means discharging the solid particles in a substantially vertical direction into a feed conduit (1),
- a moving device (2), positioned wholly or partially inside the enclosure and under the feed conduit, comprising a substantially vertical central shaft (3) rotated by a drive means (4) about a substantially vertical axis, together with deflector elements of substantially identical shape (6), fixed to the shaft (3) with respect to rotation, and preferably positioned directly above or below each other at a plurality of levels around the shaft (3) and pivotably connected to the latter in such a way that they can be raised, for example by the action of centrifugal force,
- a feed conduit (1) which at least partially surrounds the central shaft (3) and which includes at least one aperture for the discharge of the solid particles (5), located on its lateral or horizontal wall,
**characterized in that** the device contains at least one deflector element (7) positioned on the rotatable shaft (3) in which the surface area of the region of the deflector located near the shaft (3) is smaller than the surface area of the same region of the other deflector elements (6), and, in particular, the width in the proximity of the shaft is smaller than that of the other deflector elements.

2. The device as claimed in claim 1, **characterized in that** the deflector elements (6) are strips made from semi-rigid rubber (6).

3. The device as claimed in claim 1 or 2, **characterized in that** it includes three levels of deflector elements (6).

4. The device as claimed in any one of claims 1 to 3, **characterized in that** it includes two, or preferably four or even more preferably eight, deflector elements (7) whose width is modified in the proximity of the central shaft (3).

5. The device as claimed in any one of claims 1 to 4, **characterized in that** the modified deflector elements (7) are positioned on the same level, and preferably on the third and lowest level.

6. The device as claimed in any one of claims 1 to 5, **characterized in that** the decrease in the width of the deflector elements (7) is in the range from 20% to 80%, and preferably from 30% to 70%, of their initial width.

7. The device as claimed in any one of claims 1 to 6, **characterized in that** the width of the deflector elements (7) is reduced over a length in the range from 10% to 50%, preferably from 20% to 40%, and even more preferably from 20% to 30% of the total length of the deflector element.

8. The device as claimed in any one of claims 1 to 7, **characterized in that** the deflector elements (6) are positioned symmetrically on the rotating shaft.

9. The device as claimed in any one of claims 1 to 8, **characterized in that** the deflector elements (6) are equally distributed at each of the levels.

10. The device as claimed in any one of claims 1 to 9, **characterized in that** eight deflector elements (6) are positioned at each of the levels of deflector elements.

11. The device as claimed in any one of claims 1 to 10, **characterized in that** the void ratio of the deflector elements (6) is in the range from 30% to 80%.

12. The device as claimed in any one of claims 1 to 11, **characterized in that** the rotation shaft (3) can be a solid tube or a hollow tube.

13. The device as claimed in any one of claims 1 to 12, **characterized in that** the rotation speed of the deflector elements (6) is in the range from 25 to 250 rpm, and preferably from 40 to 150 rpm.

14. The use of the device as claimed in any one of claims 1 to 13 for loading catalyst particles into petroleum, chemical or petrochemical reactors.

15. A method for loading reactors, notably petroleum, chemical or petrochemical reactors, with the device as claimed in any one of claims 1 to 13.

## Patentansprüche

1. Vorrichtung zum Laden fester Partikel in einen Behälter mit:
einem Zuführmittel für zu verteilende feste Partikel, das daran angepasst ist, auf dem oberen Abschnitt des zu beladenden Behälters angeordnet zu werden, wobei das Mittel die festen Partikel im Wesentlichen senkrecht in einer Zuführleitung (1) ablässt,
eine bewegliche Einrichtung (2), die ganz oder teilweise im Inneren des Behälters unter der Zuführleitung angeordnet ist und eine Mittelwelle (3) enthält, die durch ein Motormittel (4) um eine im Wesentlichen senkrechte Achse in Drehung versetzt wird, und Ablenkelemente mit im Wesentlichen identischer Form (6), die in der Drehung fest zu der Welle (3) sind, vorzugsweise lotrecht zueinander auf verschiedenen Höhen um die Welle (3) angeordnet sind und gelenkig mit dieser verbunden sind, so dass sie sich, beispielsweise unter der Wirkung der Fliehkraft, heben können,
eine Zuführleitung (1), die zumindest teilweise die Mittelwelle (3) umgibt und zumindest eine Auslassöffnung (5) für die festen Partikel enthält, die an ihrer seitlichen oder horizontalen Wand angeordnet ist,
**dadurch gekennzeichnet**, das
die Vorrichtung zumindest ein Ablenkelement (7) enthält, das an der in Drehung versetzten Welle (3) angeordnet ist und dessen Oberfläche in einer nahe an der Welle (3) gelegenen Zone kleiner als die Oberfläche derselben Zone der anderen Ablenkelemente (6) ist, wobei insbesondere die Breite in der Nähe der Welle (3) kleiner als die der anderen Ablenkelemente (6) ist.

2. Vorrichtung gemäß Anspruch 1, **dadurch gekennzeichnet, dass** die Ablenkelemente (6) Riemen sind, die aus halbsteifem Gummi (6) gebildet sind.

3. Vorrichtung gemäß Anspruch 1 oder 2, **dadurch gekennzeichnet, dass** sie drei Ebenen von Ablenkelementen (6) enthält.

4. Vorrichtung gemäß einem der Ansprüche 1 bis 3, **dadurch gekennzeichnet, dass** sie zwei Ablenkelemente (7), vorzugsweise vier und in weiter bevorzugter Weise acht Ablenkelemente (7) enthält, deren Breite in der Nähe der Mittelachse (3) verändert ist.

5. Vorrichtung gemäß einem der Ansprüche 1 bis 4, **dadurch gekennzeichnet, dass** die veränderten Ablenkelemente (7) auf derselben Höhe angeordnet sind, vorzugsweise auf der dritten und niedrigsten Ebene.

6. Vorrichtung gemäß einem der Ansprüche 1 bis 5, **dadurch gekennzeichnet, dass** die Verringerung der Breite der Ablenkelemente (7) zwischen 20% und 80%, vorzugsweise zwischen 30% und 70% ihrer Anfangsbreite liegt.

7. Vorrichtung gemäß einem der Ansprüche 1 bis 6, **dadurch gekennzeichnet, dass** Verringerung der Breite der Ablenkelemente (7) über eine Länge verwirklicht ist, die zwischen 10% und 50%, vorzugsweise zwischen 20% und 40%, in weiter bevorzugter Weise zwischen 20% und 30% der Gesamtlänge des Ablenkelements liegt.

8. Vorrichtung gemäß einem der Ansprüche 1 bis 7, **dadurch gekennzeichnet, dass** die Ablenkelemente (6) symmetrisch an der Drehwelle angeordnet sind.

9. Vorrichtung gemäß einem der Ansprüche 1 bis 8, **dadurch gekennzeichnet, dass** die Ablenkelemente (6) gleichmäßig auf jede der Ebenen verteilt sind.

10. Vorrichtung gemäß einem der Ansprüche 1 bis 9, **dadurch gekennzeichnet, dass** acht Ablenkelemente (6) auf jeder der Ebenen von Ablenkelementen angeordnet sind.

11. Vorrichtung gemäß einem der Ansprüche 1 bis 10, **dadurch gekennzeichnet, dass** der Leerraumanteil der Ablenkelemente (6) zwischen 30% und 80% liegt.

12. Vorrichtung gemäß einem der Ansprüche 1 bis 11, **dadurch gekennzeichnet, dass** die Drehwelle (3) ein massives Rohr oder ein Hohlrohr sein kann. 10

13. Vorrichtung gemäß einem der Ansprüche 1 bis 12, **dadurch gekennzeichnet, dass** die Drehgeschwindigkeit der Ablenkelemente (6) zwischen 25 und 250 U/min und vorzugsweise zwischen 40 und 150 U/min liegt.

14. Verwendung der Vorrichtung gemäß einem der Ansprüche 1 bis 13 für das Laden von Katalysatorpartikeln in Öl-, chemische oder petrochemische Reaktoren.

15. Verfahren zum Beladen von Reaktoren, insbesondere von Öl-, chemischen oder petrochemischen Reaktoren, mit der Vorrichtung gemäß einem der Ansprüche 1 bis 13.
